Europäisches Patentamt

**European Patent Office**

Office européen des brevets

(19)

(11) Publication number: **0 105 163**
A1

(12) **EUROPEAN PATENT APPLICATION**

(21) Application number: **83108210.2**

(22) Date of filing: **19.08.83**

(51) Int. Cl.³: **G 01 S 17/58, G 01 F 3/36**

(30) Priority: **07.09.82 US 415274**

(43) Date of publication of application: **11.04.84**
**Bulletin 84/15**

(84) Designated Contracting States: **DE GB IT**

(71) Applicant: **ZYGO CORPORATION, Laurel Brook Road,**
**Middlefield Connecticut 06455 (US)**

(72) Inventor: **Demarest, Frank C., 14 Cooks Lane,**
**Killingworth Connecticut 06417 (US)**
Inventor: **Sommargren, Gary E., 119 Neck Road, Madison**
**Connecticut 06443 (US)**
Inventor: **Truax, Bruce E., Box 1010 Arrowhead Court,**
**Durham Connecticut 06422 (US)**

(74) Representative: **Klingseisen, Franz, Dipl.-Ing. et al, Dr. F.**
**Zumstein sen. Dr. E. Assmann Dr. F. Zumstein jun.**
**Dipl.-Ing. F. Klingseisen Bräuhausstrasse 4,**
**D-8000 München 2 (DE)**

(54) **Electro-optical velocity measuring system.**

(57) An electro-optical system for the noncontact measurement of the velocity of a diffusely scattering surface is de-
scribed. In one embodiment of the invention, a linearly po-
larized monochromatic light beam (22) is converted into two
orthogonally polarized beams (44, 46) which also have a
frequency difference induced between them. The two
beams are directed so that they intersect at the moving sur-
face (56) to be measured such that there is a predetermined
angle between the beams in the plane containing the veloc-
ity vector of the moving surface. Light scattered (58) by the
surface from both of the incident beams is picked up by a
pair of photosensors (74, 76). The difference between the
output of the two photosensors is a signal which is indepen-
dent of scattering direction and is directly proportional to
the velocity of the moving surface in the plane determied by
the two incident beams. Measurements of substantially im-
proved dynamic range for the primary velocity signal and a
non-zero primary velocity signal at zero surface velocity are
obtained by using an optical up/down frequency shifter to
generate the two beams which illuminate the moving
surface.

ACTORUM AG

Title

ELECTRO-OPTICAL VELOCITY MEASURING SYSTEM

Background of the Invention Field of the Invention

The present invention relates generally to an electro-optical system for
the noncontact measurement of the velocity of a diffusely scattering
surface. More particularly, the invention relates to a system which
employs dual laser or light beam illumination including not only means
for providing a velocity bias so that the primary velocity signal is
non-zero at zero velocity but also means for providing substantially
improved dynamic range for the primary velocity signal.

The Prior Art

For the accurate measurement of the velocity of soft, elicate, hot, or
moving objects, a noncontacting velocimeter is desirable because
contacting sensors 1) may slip on the surface being measured, 2) may
distort or damage the surface being measured, 3) may not be able to
maintain contact due to the erratic motion of the object being measured,
or 4) may be destroyed due to the erratic, violent motion of the object
being measured. Prior-art noncontacting velocimeters employ various
techniques: namely, 1) moving pattern method, 2) direct Doppler method,
and 3) differential Doppler method.

The moving pattern method uses a beam of coherent light, usually from a
laser, to illuminate the diffusely scattering surface to be measured.
If the light scattered by the moving surface is imaged onto a viewing
screen, a granular pattern is observed which appears to move at a rate
related to the velocity of the surface. The rate of motion of the
pattern can be measured by passing it through a grating comprised of
alternating opaque and transparent straight, equally spaced parallel
bands oriented perpendicular to the direction of motion of the pattern.
The intensity of the light transmitted through the grating is modulated at a frequency which is proportional to the rate of motion of the
pattern. The modulation frequency can be measured using a photoelectric
detector and suitable electronic circuitry. The velocity component of
the surface to be measured can then be computed. Flower, et al.,
U.S. Patent 3,432,237 issued March 11, 1969 discloses a velocimeter
based on this method.

While the moving pattern method has certain advantages, it suffers from
a serious disadvantage arising from the fact that the relationship
between the surface and the pattern motion is sensitive to the angular
orientation of the surface. Thusly, this method is susceptivle to
errors which are proportional, to first order, to the product of the
change in orientation and the distance between the illumination spot
on the surface and the grating.

Another prior-art technique, the direct Doppler method, is based on
measuring the frequency shift, i.e., the Doppler shift, of a beam of
light after it is scattered from a moving surface. The magnitude of
the Doppler shift is proportional to a velocity component of the
surface which scattered the light. The Doppler shift can be measured
by heterodyning the scattered light with the unshifted light from the
same light source.

While the direct Doppler method has certain advantages, it suffers from
a serious disadvantage arising from the fact that the condition for an
optimal signal and maximal intensitivity to changes in the angle of the
surface requires that the illumination be perpendicular to the surface.
Unfortunately, very often it is desirable to measure the velocity
component of the surface in the direction parallel to the surface. For
this requirement, perpendicular illumination does not provide the
information about the velocity component of interest.

Another prior-art technique, the differential Doppler method, disclosed
in Penney, et al., U.S. Patent 3,604,804 issued September 14, 1971, is
based on nearly                illumination. This technique overcomes
some of the aforementioned disadvantages of the direct Doppler method.
Nevertheless, the apparatus disclosed in the Penney patent has several

- 3 -

inherent disadvantages. Firstly, the primary velocity signal is zero at zero surface velocity. In practice, this requires that only surface velocity above a non-zero limit can be measured. Secondly, bedause of the wide distribution in the sizes of the spatial characteristics of the surface being measured, there is a large, wildly fluctuating low frequency light signal at the photosensor which severely limits the dynamic range of this type apparatus.

The use of a frequency shifter to introduce a frequency shift to permit the measurement of zero and negative velocities has been part of the prior art in Doppler velocimeters used in gas dynamic particle studies, e.g., the one described in the article "Laser Doppler Velocimeters" by L.M. Fingerson, Laser Focus, August 1982, pp. 53-56. Nevertheless, measuring the speed of a diffusely scattering moving surface is substantially more difficult than measuring the speed of gas particles. The approach discussed in the aforementioned article is both very expensive and does not solve the problems addressed by the instant invention.

While these prior-art techniques are useful for some applications, they cannot be used for many industrial applications. For example, in a rolling mill it is frequently necessary to measure the length, i.e. the integral of the velocity, of an object whose velocity ranges over a wide range including zero velocity. For example, the shear-to-length operation in a bloom mill operates down to zero velocity, and, in fact, requires a range which can handle sligthly negative velocities.

Object of the Invention

In view of the foregoing, it is the main object of this invention to provide an electro-optical system for the noncontact measurement of the velocity of a diffusely scattering surface in which the primary velocity signal is not zero at zero surface velocity.

Also an object of the invention is to provide an electro-optical system with a large dynamic range for the primary velocity signal.

Another object of the invention is to provide an electro-optical system of relatively simple design which operates reliably and which can be operated with a minimum of field adjustments.

## Statement of the Invention

In accord with one embodiment of the instant invention, the noncontact velocity measuring system includes (1) a source of a beam of linearly polarized monochromatic radiant energy, such as a laser, (2) a means for converting said linearly polarized beam into two coincident, orthogonally polarized beams which also have a frequency difference induced between them, (3) means for splitting said beam into two orthogonally polarized separate beams each of which is linearly polarized and contains radiant energy of only one frequency, (4) means for directing said two separate beams such that they intersect at and are incident upon a diffusely scattering moving surface such that there is a predetermind angle between the beams in the plane which contains the velocity vector of the moving surface, (5) means for collecting the radiation scattered by the surface from said incident beams, (6) means for splitting said scattered radiation into two beams, (7) means for mixing the orthogonally polarized components in each of the two scattered beams such that the primary velocity signals in the two scattered beams are 180 degrees out of phase with each other, (8) means for photosensing said two beams, (9) means for subtracting the one photosignal from the other, and (10) means for converting said difference signal to an output proportional to the velocity of the moving surface.

Preferably, the system includes known means to convert the cross section of said coincident beams into an elliptical cross section with its long axis parallel to the velocity of the surface to produce a signal with a higher signal-to-noise ratio and a narrower velocity spectrum than with a circular cross section.

The Drawings

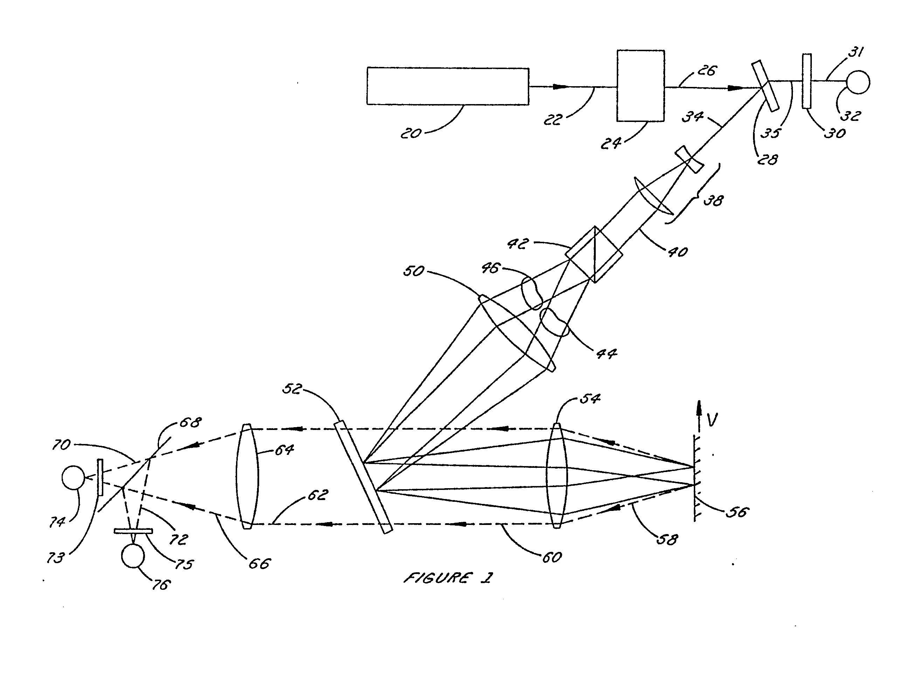

In the drawings, Fig. 1 is a schematic diagram of the optical system of
the instant invention.

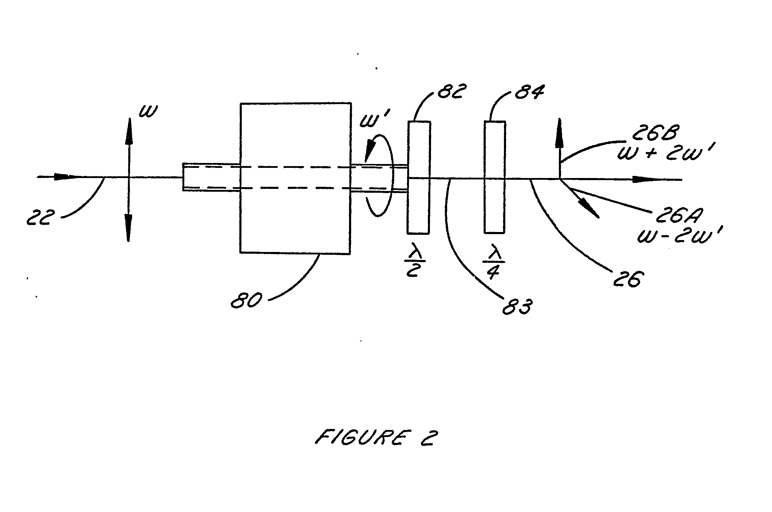

Figure 2 is a schematic diagram of the optical up/down frequency shifter
in Fig. 1.
Figure 3 is a block diagram of the electronic circuitry for processing
the signals produced by the photosensors in the system shown in Fig. 1.

Detailed Description of the Invention

While the technique has application for a wide range of radiation
sources, the following description is taken by way of example with
respect to an optical measuring system. The term "radiant energy" as
used herein includes, but is not limited to, electromagnetic energy
of all frequency ranges.

Referring to Fig. 1 of the drawings, a laser (20) produces a narrow beam
of linearly polarized, monochromatic light (22) of frequency $\omega$ . The
beam (22) passes through the up/down frequency shifter (24) which is
described in more detail in the description of Fig. 2. Beam (26) is
split into two beams (34) and (35) by beamsplitter (28) which is
partially transmissive and partially reflective. The polarizer plate
(30) mixes the orthogonally polarized coincident components of beam (35)
to produce beam (31). Photosensor (32) then provides a reference signal
with a frequency $4\omega'$, the frequency difference induced by the up/down
frequency shifter (24) between the orthogonally polarized components of
beam (26).

The anamorphic beam expander (38) converts the circular cross section
of beam (34) into a beam (40) which has an elliptical cross section
with its major axis parallel to the velocity vector of the surface.
The elliptical cross section has the advantages of producing an enhanced
signal-to-noise ratio and a narrower velocity spectrum. Woolaston prism

- 6 -

(42) separates the orthogonally polarized components of beam (40) into two beams (44) and (46) whose directions ofpropagation differ by a small angle. Lenses (50) and (54) and beamsplitter (52) divert the beams (44) and (46) so that they intersect at the diffusely scattering surface (56). The velocity V, of surface (56) is shown by the arrow in Fig. 1. The light scattered by the surface (56) from the incident beams is shown in the figures as the dashed rays (58). The scattered light (58) is collected by lens (54) and is transmitted by beamsplitter (52) to provide beam (62). Lens (64) transforms beam (62) into a converging beam (66) which is split into a pair of beams (70) and (72) by beamsplitter (68). Beams (70) and (72) pass through polarizers (73) and (75). Polarizers (73) and (75) mix the orthogonally polarized components in beams (70) and (72), respectively. The optic axes of polarizers (73) and (75) are oriented so that signals in photosensors (74) and (76) are 180 degrees out of phase.

Figure 2 is a schematic diagram of the optical up/down frequency shifter (24). The up/down frequency shifter (24) is placed in the linearly polarized, monochromatic beam (22) in order to: (1) convert the linearly polarized beam (22) into two orthogonally polarized, coincident beams, (2) induce a frequency shift between these two orthogonally polarized beams such that the frequency of one is $\omega + 2\omega'$ and the frequeny of the other is $\omega - 2\omega'$ where $\omega$ is the frequency of beam (22) and $4\omega'$ is the difference frequency between the two orthogonally polarized beams, and (3) accomplish (1) and (2) with good efficiency, i.e. nominally 50 % of beam (22) goes into each orthogonally polarized beam . In one embodiment, up/down frequency shifter (24) is comprised of a rotating half-wave retardation plate (82). Half-wave plate (82) is rotated by a device (80) at a frequency $\omega'$. Device (80) can be a motor with a through-hole in its shaft. The resulatant beam (83) then passes through a quarter-wave retardation plate (84) to produce beam (26) which is comprised of two coincident, linearly orthogonally polarized beams (26A) and (26B) each with frequency $\omega + 2\omega'$ and $\omega - 2\omega'$ , respectively. Mechanical

rotation of the half-wave plate (82) can provide frequency shift, $4\omega'$ of up to 2 - 5 KHz between the two orthogonally polarized beams. When greater frequency shifts are desired, the mechanical rotation of the half-wave plate can be replaced by an equivalent electro-optical device.

The range to which the apparatus can measure velocities on both sides of zero velocity is determined by the magnitude of the frequency shift. For the instant invention, negative velocities up to nominally 1% of the positive velocity limit can be measured. By rotating quarter-wave retardation plate (84) by 90 degrees, the velocity range can be flipped about zero velocity to provide a significant negative velocity range. This can be done either manually or automatically.

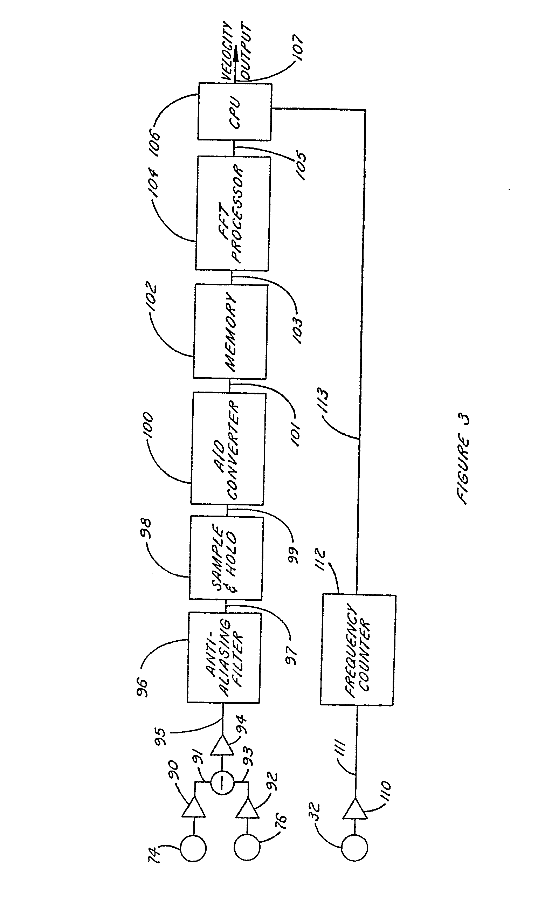

Figure 3 is a block diagram of the electronic circuitry for processing the signals produced by the photosensors (74) and (76) in order to yield an output signal proportional to the velocity of the surface (56). Preamplifiers (90) and (92) convert the photocurrents from photosensors (74) and (76) to electrical signals (91) and (93). Difference amplifier (94) subtracts signal (91) from signal (93) to produce signal (95) so that the large, spurios low frequency components present in signals (91) and (93) are eliminated from signal (95). Furthermore, since the surface velocity frequency shift signals are 180 degrees out of phase in signals (91) and (93), the subtraction amplifier (94) not only substantially eliminates the large, spurios low frequency components but it also enhances the quality of the primary velocity signal.

The analog signal (95) is passed through an anti-aliasing filter (96) to eliminate any signal components above the Nyquist limit of one-half the sampling frequency. The sample-and-hold circuit (98) and the analog-to-digital converter (100) change the continuous analog signal (97) to a series of digital values (101) which are stored in a digital memory (102). When the memory contains the correct number of digital values for the Fast Fourier Transform, FFT, processor, the contents (103) of the digital memory (102) are transferred to the FFT processor
(104) which calculates the frequeny spectrum of the signal. The
frequency spectrum (105) is then transferred to the microprocessor
(106) which finds the frequency of the peak which is proportional
to the velocity of the moving surface.

The signal from photosensor (32) is passed through an amplifier (110)
which provides a signal (111) suitable for the frequency counter (112).

The microprocessor (106) calculates the velocity of the surface by
subtracting the frequency shift (113) measured by the frequency counter
(112) from the frequency of the peak of the frequency spectrum (105)
and multiplying by a constant to obtain the velocity output (107) in
conventient units, e.g. feet/second. Velocity output (107) can be used
with a visual digital display (not shown) or as an input to a computer
for process control.

Obviously, changes can be made in the implementation of the signal
processing. Depending on the cost and speed of available components,
it may be desirable to share the processing among a combination using
more than one sample-and-hold (98), analog-to-digital converter (100)
digital memory (102), FFT processor (104), or microprocessor (106).
It may also be desirable to change the division of processing between
the FFT processor (104) and microprocessor (106) or combine them into
one unit.

The device described herein has significant advantages over prior-art
devices. In particular, the splitting of the laser beam into two
orthogonally polarized beams of nominally equal intensity to
illuminate the moving surface permits the generation of two out of
phase signals, using polarization techniques, which can be subtracted
to provide a substantially improved range for the primary velocity
signal. In addition, the use of an optical up/down frequency shifter
provides a velocity bias so that zero and negative velocities can be
measured.

Obviously, changes can be made in the embodiment of the invention
illustrated, and the invention as defined in the claims.

What is claimed

1. In a noncontacting velocity measuring system which measures the velocity of a diffusely scattering surface by the Doppler shift between two beams of light scattered from the surface using a source such as a laser which produces a beam of linearly polarized monochromatic radiant energy, the improvement which comprises providing (1) a means for converting said linearly polarized beam into two coincident, orthogonally polarized beams which also have a frequency difference induced between them, (2) means for splitting said bem into two orthogonally polarized seperate beams each of which is linearly polarized and contains radiant energy of only one frequency, (3) means for directing said two seperate beams such that they intersect at and are incident upon a diffusely scattering moving surface such that there is a predetermined angle between the beams in the plane, which contains the velocity vector of the moving surface, (4) means for collecting the radiation scattered by the surface from said incident beams, (5) means for splitting said scattered radiation into two beams, (6) means for mixing the orthogonally polarized components in each of the two scatttered beams such that the primary velocity signals in the two scattered beams are 180 degrees out of phase with each other, (7) means for photosensing said two beams, (8) means for subtracting the one photosignal from the other, and (9) means for converting said difference signal to an output proportional to the velocity of the moving surface.

2. The system of claim 1, in which means are provided to convert the cross section of said coincident beams to an elliptical cross section with its long axis parallel to the velocity of said moving surface.

3. The system of claim 1, in which means comprises a half-wave retardation plate rotating at frequency $\omega'$ and a fixed quarter-wave retardation plate, whereby two coincident, orthogonally polarized beams are produced with frequencies of $\omega+2\omega'$ and $\omega-2\omega'$, where $\omega$ is the frequency of said entering beam.

FIGURE 1

FIGURE 2

FIGURE 3

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-3 915 572 (K.L. ORLOFF) * Column 3, line 53 - column 7, line 30; figure 1 * | 1-3 | G 01 S 17/58 G 01 P 3/36 |
| Y | JAPANESE JOURNAL OF APPLIED PHYSICS, vol. 14, suppl. 14-1, 1975, pages 329-333, Tokyo, JP. Y. OHTSUKA et al.: "Laser heterodyne measurements of extremely low velocities of moving bodies" * Pages 329-331, paragraph 2: "Description of the system"; figure 1 * | 1 | |
| Y | DE-A-2 947 800 (JENOPTIK JENA) * Page 4, lines 13-22; page 5, line 14 - page 6, line 23; figure 1 * | 2 | |
| Y | APPLIED OPTICS, vol. 13, no. 11, November 1974, pages 2562-2579, New York, USA F. DURST et al.: "Removal of pedestals and directional ambiguity of optical anemometer signals" * Page 2564, right-hand column, lines 35-42 * | 3 | |

TECHNICAL FIELDS SEARCHED (Int. Cl. 3)

G 01 S
G 01 P

The present search report has been drawn up for all claims

| Place of search THE HAGUE | Date of completion of the search 15-12-1983 | Examiner MARCHAU M.F. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82